# EUROPEAN PATENT SPECIFICATION

(11) **EP 1 440 836 B1**
(45) Date of publication and mention of the grant of the patent: **26.03.2008**
(21) Application number: 03257593.8
(22) Date of filing: 03.12.2003
(51) Int. Cl.: B60K 31/00

(54) **Adaptive cruise control apparatus**
Adaptive Geschwindigkeitsregelvorrichtung
Dispositif de commande adaptative de vitesse

(30) Priority: 16.01.2003 GB 0300974
(43) Date of publication of application: 28.07.2004
(73) Proprietor: Ford Global Technologies, LLC, Dearborn, MI 48126 (US)
(72) Inventor: Dunoyer, Alain, Chapelfields Coventry, CV5 8NY (GB); Leatherland, Adam Keith, Tile Hill Coventry, CV4 9HD (GB)
(74) Representative: Potts, Susan Patricia

(56) References cited:
- EP-A- 0 897 824
- WO-A-98/29279
- DE-A- 10 059 792
- US-A- 4 434 469
- US-A- 4 622 636
- US-B1- 6 327 530

## Description

The present invention relates to adaptive cruise control for motor vehicles.

Conventional cruise control systems fulfil the function of speed control of the vehicle. A desired speed is set by the driver and a control system operates on the engine (usually the throttle only) to maintain the desired speed. When the traffic is light, this simple speed control is acceptable to the driver, however if the traffic is heavy the driver is faced with constantly adjusting the set speed in order to maintain a safe distance from preceding traffic and may have to disengage the cruise control in order to brake.

Many systems have now been developed by the addition of a distance sensor to the conventional cruise control system which adds distance keeping to the basic speed control function. Many such systems also include means to monitor the relative velocities of the vehicle which is equipped with the cruise control system and a preceding vehicle. Moreover the engine control also often includes a limited authority braking system, so that the speed control / distance keeping can be effected by a combination of the throttle and the brake.

Such a system may operate as an adaptive cruise control system which, when activated, enables the vehicle in question to reduce speed automatically when a preceding target vehicle is detected in its path. The vehicle will then follow, no closer than a minimum set time gap (equivalent to a minimum distance), the closest preceding target vehicle that is "in path." This will continue until the closest preceding target vehicle is detected to move out of the path of the vehicle at which point the original set speed is resumed. An example of this type of system is disclosed in patent documents US 5,710,565 and WO 98/29279.

Hence an adaptive cruise control system is one that maintains cruise speed in the same way as a conventional cruise control system when the road ahead is clear but when following a vehicle, maintains the gap to the vehicle ahead by operating the throttle and brake systems. The gap is usually expressed in terms of time headway, for example one second. However, the time headway concept is only valid in steady state conditions, so, when trying to automatically stop behind a target vehicle which comes to a halt in a traffic queue, a different strategy is required.

According to the present invention, there is provided a method for controlling the distance of a vehicle from a target, the vehicle being equipped with a target range measuring device, a vehicle speed measuring device, a braking system and a throttle controller, characterised in that the method includes the steps of;
receiving a target range value from the target range measuring device,
receiving a vehicle speed value from the vehicle speed measuring device,
detecting a decreasing range to the target,
generating a first brake demand signal using a proportional derivative algorithm,
applying the first brake demand signal to the braking system to decelerate the vehicle in a linear fashion,
selecting from a look-up table containing pre computed brake demand values for given target ranges and vehicle speeds, a second brake demand value relating to the received target range and vehicle speed values
and applying the second brake demand value to the braking system,
continuing to monitor received target range and vehicle speed values and selecting from the look-up table further brake demand values appropriate to the received target range and vehicle speed values and
applying the further brake demand values to the braking system until the vehicle comes to a standstill behind the target.

The invention permits an adaptive cruise control vehicle to be brought to a standstill behind a preceding target vehicle.

The inventors have discovered that automatically stopping a vehicle in accordance with Newton's equations of motion i.e. substantially linearly, by applying a constant deceleration rate, feels unnatural to the driver. Most drivers, when manually bringing a vehicle to halt behind a preceding one, tend to decelerate initially at a comparatively high rate until they are within around twelve metres from the vehicle in front and then decelerate more gradually until the vehicle comes to rest a metre or two behind the preceding vehicle. The use of a look-up table enables emulation of this driver behaviour. Thus the invention is able to deliver a consistent and smooth way of stopping behind a preceding vehicle.

The invention has the further advantage of eliminating hunting which can occur when operating the conventional adaptive cruise control system under such conditions.

The look-up table may be compiled empirically.

In a preferred embodiment, the controller acts to decelerate the vehicle in a linear fashion until the target range is approximately 12 metres, vehicle speed is less than around four metres per second and the vehicle is closing in on the target. Subsequently, the controller decelerates the vehicle in a non-linear fashion.

Optionally, the look-up table may be configured to include vehicle speed demand values relating to measured target range. In this case when braking is no longer required and the vehicle is creeping along behind the target in a queue of vehicles, the controller is further adapted to select from the look up table a vehicle speed demand appropriate to the measured target range, for applying to the throttle controller.

A further optional refinement to this creep mode of operation, comprises a state machine implemented in the controller that forces vehicle speed demand to zero when the brake demand value selected by the controller is non-zero. As braking effect takes a finite time to ramp down to zero, this refinement ensures that the vehicle is not being asked to accelerate whilst at the same time, still braking. As a safety feature, priority is given to braking. One situation in which this refinement is useful is when the target pulls away whilst the equipped vehicle is still braking to a standstill behind. The state machine waits for the brakes to be fully off before applying the speed demand to the throttle controller.

Some embodiments of the invention will now be described, by way of example only, with reference to the drawings of which;
figure 1 is a block diagram showing an adaptive cruise control apparatus in accordance with an embodiment of the invention and its incorporation with conventional vehicle systems,
figure 2 is a look-up table braking map in accordance with an embodiment of the invention, and
figure 3 is a look-up table speed map in accordance with an embodiment of the invention.

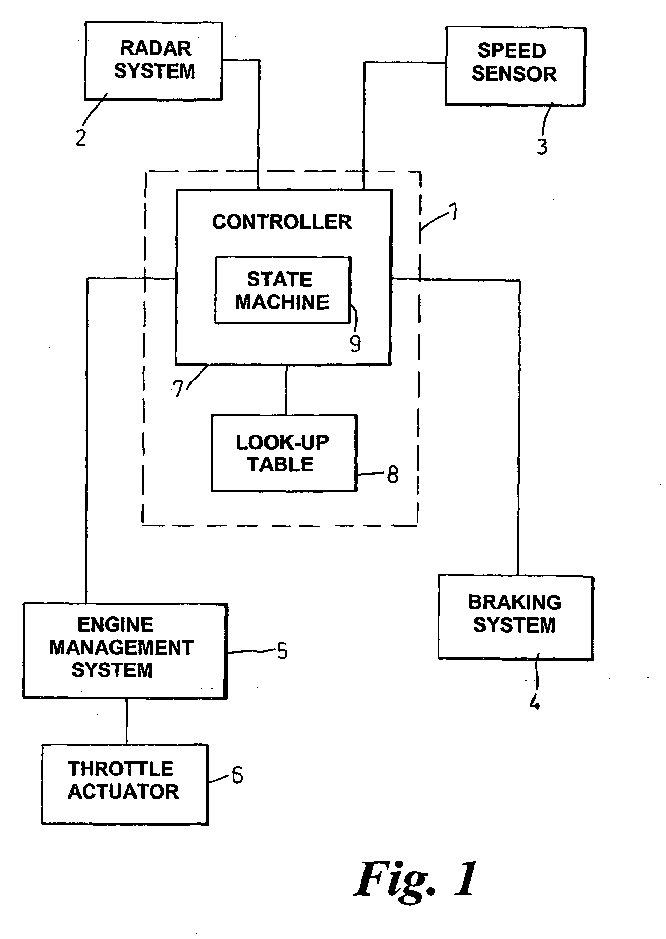

In figure 1 an adaptive cruise control apparatus (1) is fitted to a vehicle (not shown). The vehicle is also equipped with a radar sensor (2) for measuring the distance between the vehicle so-equipped and a preceding target vehicle (not shown) and also relative vehicle speed, a speed sensor (3) for measuring the speed of the equipped vehicle, a braking system (4), an engine management system (5) and a throttle actuator (6). All the equipment represented in figure 1, with the exception of the apparatus (1), operates in a conventional manner.

The adaptive cruise control apparatus (1) comprises a controller (7) and a look up table (8). The controller (7) has connections to all the other modules of figure 1 enabling it to receive and monitor target range values and equipped vehicle speed values, access the look up table (8) and send brake demand and throttle demand signals to the brake system (4) and engine management system (5) respectively.

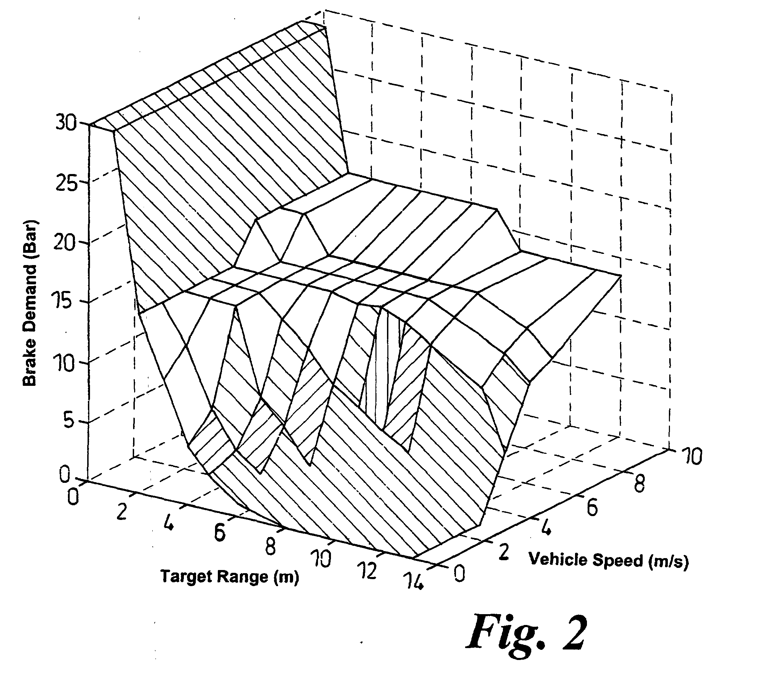

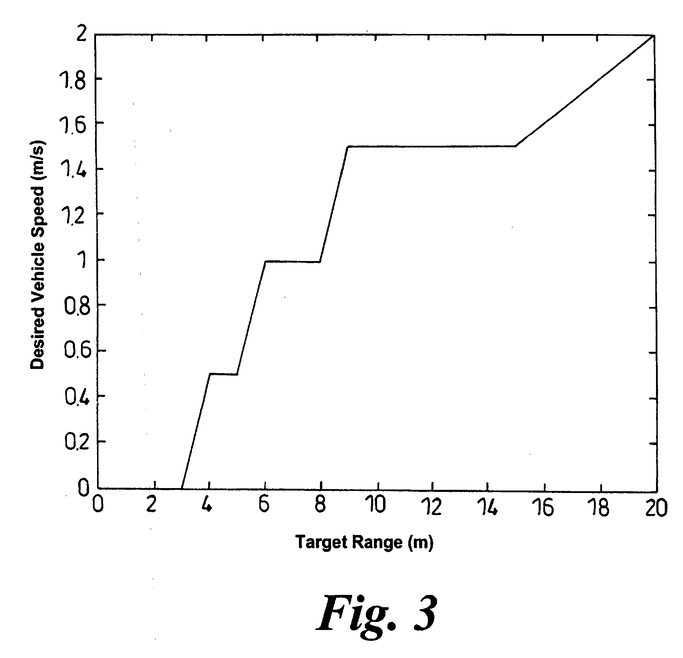

A portion of the look-up table (8) has a two-dimensional construction which gives brake demand values as a function of preceding target vehicle range and equipped vehicle speed. In this example, the map associated with this first part is shown in figure 2. Another portion of the look-up table (8) has a one-dimensional construction which provides a desired equipped vehicle speed value as a function of target range. In this example, the map associated with this second part is shown in figure 3.

In operation, initially the equipped vehicle is functioning in adaptive cruise control mode and following a preceding target vehicle at a fixed distance, say 25 metres, in accordance with a set time headway. Suppose that the target vehicle needs to slow down and stop behind a queue of vehicles. As the target begins to slow, its decreasing range to the equipped vehicle is detected by the controller (7) via the radar system (2). Knowing the target range and the speed of the equipped vehicle, the controller (7) uses a conventional proportional derivative algorithm to generate the appropriate brake demand signal which is fed to the braking system (4). The brake demand signal generated at this point in time decelerates the equipped vehicle in a linear fashion down to range of twelve metres and a speed of four metres per second. When these two range and speed conditions are met and the controller (7) detects via the radar system (2), that the vehicle is closing in on the target, then the apparatus (1) enters a mode of operation whereby brake demand is dictated by the look-up table map of figure 2, that is the controller (7) monitors target distance (via the radar sensor (2)) and the speed of the equipped vehicle via the speed sensor (3) interrogates the look up table (figure 2) to extract the brake demand value relating to the distance and speed values and the generates the appropriate demand signal and applies this signal to the braking system (4). It performs this routine every 100 millisecond in this example until the equipped vehicle comes to standstill.

Once stopped, (either automatically or by the drivers action), the controller (7) then acts to permit the equipped vehicle to move along slowly (in "creep mode") following behind the target vehicle as the target vehicle moves forwards in a traffic queue. The controller (7) continues to monitor target range but now interrogates the one dimensional part of the look up table (8) for a desired vehicle speed value for the measured target range (figure 3). The controller (7) then generates a speed demand signal which it sends to the engine management system (5) which, in turn, send an appropriate throttle demand control signal to the throttle actuator (6). A state machine (9) incorporated in the controller (7) forces the speed demand signal to zero whenever the braking map output (figure 2) of the lookup table is non-zero.

## Claims

1. A method for controlling the distance of a vehicle from a target, the vehicle being equipped with a target range measuring device (2), a vehicle speed measuring device (3), a braking system (4) and a throttle controller (6), **characterised in that** the method includes the steps of;
(a) receiving a target range value from the target range measuring device (2),
(b) receiving a vehicle speed value from the vehicle speed measuring device (3),
(c) detecting a decreasing range to the target,
(d) generating a first brake demand signal using a proportional derivative algorithm,
(e) applying the first brake demand signal to the braking system, to decelerate the vehicle in a linear fashion down to a preditermined range and speed of the vehicle,
(f) selecting from a look-up table (8) containing pre computed brake demand values for given target ranges and vehicle speeds, a second brake demand value relating to the received target range and vehicle speed values
and applying the second brake demand value to the braking system (4),
(g) continuing to monitor received target range and vehicle speed values and selecting from the look-up table further brake demand values appropriate to the received target range and vehicle speed values and
applying the further brake demand values to the braking system until the vehicle comes to a standstill behind the target.

2. A method as claimed in claim 1 wherein step (f) is commenced when the target range is measured to be approximately 12 metres, the vehicle speed is measured to be approximately 4 metres per second and the vehicle is detected to be closing in on the target.

3. A method as claimed in claim 1 or claim 2 including the further step (h) of selecting a pre-computed vehicle speed demand value from a look-up table (8) containing vehicle speed demand values for given target ranges
and applying the selected vehicle speed demand value to the throttle controller (6).

4. A method as claimed in claim 3 including the further step of forcing the selected vehicle speed demand value to zero when a selected brake demand value is non-zero.

## Patentansprüche

1. Verfahren zur Regelung der Distanz eines Fahrzeugs von einem Ziel, wobei das Fahrzeug mit einer Zielbereichsmessvorrichtung (2), einer Fahrzeuggeschwindigkeitsmessvorrichtung (3), einem Bremssystem (4) und einem Drosselklappenregler (6) ausgerüstet ist, **dadurch gekennzeichnet, dass** das Verfahren die folgenden Schritte beinhaltet:
(a) Erhalten eines Zielbereichswertes von der Zielbereichsmessvorrichtung (2);
(b) Erhalten eines Fahrzeuggeschwindigkeitswertes von der Fahrzeuggeschwindigkeitsmessvorrichtung (3);
(c) Ermitteln eines abnehmenden Bereichs zum Ziel;
(d) Erzeugen eines ersten Bremsanforderungssignals unter Verwendung eines proportionalen Differenzialalgorithmus;
(e) Auslösen des ersten Bremsanforderungssignals an das Bremssystem, um das Fahrzeug in einer linearen Weise herunter auf einen vorbestimmten Bereich und eine vorbestimmte Geschwindigkeit des Fahrzeugs zu verlangsamen;
(f) Auswählen eines zweiten Bremsanforderungswertes im Verhältnis zu den erhaltenen Zielbereichs- und Fahrzeuggeschwindigkeitswerten aus einer Nachschlagtabelle (8), die vorberechnete Bremsanforderungswerte für gegebene Zielbereiche und Fahrzeuggeschwindigkeiten enthält;
und Auslösen des zweiten Bremsanforderungswertes an das Bremssystem (4);
(g) Fortsetzen der Überwachung der erhaltenen Zielbereichs- und Fahrzeuggeschwindigkeitswerte sowie Auswählen weiterer entsprechender Bremsanforderungswerte für die erhaltenen Zielbereichs- und Fahrzeuggeschwindigkeitswerte aus der Nachschlagtabelle ;
und Auslösen der weiteren Bremsanforderungswerte an das Bremssystem, bis das Fahrzeug hinter dem Ziel zu einem Stillstand kommt.

2. Verfahren nach Anspruch 1, bei dem der Schritt (f) beginnt, wenn gemessen wird, dass der Zielbereich etwa 12 Meter beträgt, die Fahrzeuggeschwindigkeit etwa 4 Meter pro Sekunde beträgt und ermittelt wird, dass das Fahrzeug zum Ziel aufschließt.

3. Verfahren nach Anspruch 1 oder Anspruch 2, das den weiteren Schritt (h) des Auswählens eines vorberechneten Fahrzeuggeschwindigkeitsanforderungswertes aus einer Nachschlagtabelle (8), die Fahrzeuggeschwindigkeitsanforderungswerte für gegebene Zielbereiche enthält,
und des Auslösens des ausgewählten Fahrzeuggeschwindigkeitsanforderungswertes an den Drosselklappenregler (6) beinhaltet.

4. Verfahren nach Anspruch 3, das den weiteren Schritt des Herunterzwingens des ausgewählten Fahrzeuggeschwindigkeitsanforderungswertes auf Null beinhaltet, wenn ein ausgewählter Bremsanforderungswert nicht Null beträgt.

## Revendications

1. Procédé de commande de la distance d'un véhicule par rapport à une cible, le véhicule étant équipé d'un dispositif de mesure de distance par rapport à la cible (2), d'un dispositif de mesure de vitesse de véhicule (3), d'un système de freinage (4) et d'un dispositif de commande de papillon des gaz (6), **caractérisé en ce que** le procédé comprend les étapes consistant à:
(a) recevoir une valeur de distance par rapport à la cible délivrée par le dispositif de mesure de distance par rapport à la cible (2);
(b) recevoir une valeur de vitesse de véhicule délivrée par le dispositif de mesure de vitesse de véhicule (3);
(c) détecter une distance décroissante par rapport à la cible;
(d) générer un premier signal de demande de freinage en utilisant un algorithme de dérivation proportionnelle;
(e) appliquer le premier signal de demande de freinage au système de freinage pour ralentir le véhicule de façon linaire jusqu'à atteindre une distance par rapport à la cible et une vitesse du véhicule prédéterminées;
(f) sélectionner une deuxième valeur de demande de freinage associée aux valeurs reçues de distance par rapport à la cible et de vitesse de véhicule dans une table de consultation (8) contenant des valeurs de demande de freinage pré-calculées pour des distances par rapport à la cible et des vitesses de véhicule données,
et appliquer la deuxième valeur de demande de freinage au système de freinage (4); et
(g) continuer à surveiller les valeurs reçues de distance par rapport à la cible et de vitesse de véhicule et sélectionner dans la table de consultation des valeurs de demande de freinage supplémentaires appropriées pour les valeurs reçues de distance par rapport à la cible et de vitesse de véhicule, et
appliquer les valeurs de demande de freinage supplémentaires au système de freinage jusqu'à ce que le véhicule s'immobilise derrière la cible.

2. Procédé selon la revendication 1, dans lequel l'étape (f) commence lorsque la distance mesurée par rapport à la cible est d'approximativement 12 mètres, que la vitesse mesurée du véhicule est d'approximativement 4 mètres par seconde et qu'il est détecté que le véhicule encadre la cible.

3. Procédé selon la revendication 1 ou 2, comprenant l'étape supplémentaire (h) consistant à sélectionner une valeur de demande de vitesse de véhicule pré-calculée dans une table de consultation (8) contenant des valeurs de demande de vitesse de véhicule pour des distances par rapport à la cible données,
et à appliquer la valeur sélectionnée de demande de vitesse de véhicule au dispositif de commande de papillon des gaz (6).

4. Procédé selon la revendication 3, comprenant l'étape supplémentaire consistant à forcer la valeur de demande de vitesse de véhicule à descendre jusque zéro lorsqu'une valeur de demande de freinage sélectionnée est non nulle.
